# EUROPEAN PATENT APPLICATION

(11) **EP 3 151 102 A1**
(43) Date of publication of application: **05.04.2017**
(21) Application number: 16191626.7
(22) Date of filing: 29.09.2016
(51) Int. Cl.: G06F 3/0484, H04L 12/28, G06F 3/0481

(54) **SYSTEM AND METHOD FOR CONTROLLING A FUNCTION OF AN APPARATUS**

(30) Priority: 30.09.2015 BE 201505603
(71) Applicant: Niko NV, 9100 Sint-Niklaas (BE)
(72) Inventor: BOURDEAU, Valérie, B-9000 Gent (BE); DESMET, Arne, B-8500 Kortrijk (BE); HEYRMAN, Koen, B-9120 Melsele (BE); VERHAEGHE, Niels, B-9070 Destelbergen (BE); ZWANCKAERT, Stijn, B-9770 Kruishoutem (BE)
(74) Representative: Beck, Michaël Andries T.

(57) **Abstract**

The invention pertains to a home automation system, comprising a plurality of apparatuses (199) and a system (100), connected to the apparatuses (199) via a network (150), for adjusting a control parameter of a function of at least one apparatus of said plurality of apparatuses (199). The system comprises a display to display a GUI element; a human interface device (HID) to accept user interaction with the GUI element; and means to transmit the control parameter to the apparatus in response to the interaction. The system operates the GUI element in a first state with a first representation and a second state with a second representation, the first representation occupying a smaller area of the display. The first representation comprises an icon graphically indicating the controlled function and the value of the control parameter. The first state is responsive to a first predetermined input of the HID to transition to the second state. The second representation comprises means to select the value of the control parameter; and the second state is responsive to a second predetermined input of the HID to transition to the first state.

## Description

### Field of the Invention

The present invention pertains to the field of user interfaces in home automation systems, in particular user interfaces for controlling a function of a home automation system by means of at least one control parameter whose value varies over a set or range of values.

### Background

It is known to control functions of apparatus in the physical world by means of a parameter whose value varies over a set or range of values. Examples of such functions are the sound volume regulation of audio equipment, the brightness of a light equipped with a dimming function, the motor speed or degree of closure of for example gates and shutters, and the like. In the physical world, typical controls used to change the scalar parameter include switches, knobs, dials, and sliders. It is an advantage of typical controls that they combine a way to accept user input (the desired change in the value of the control parameter) with a way to communicate state information to the user (the position in which the switch, knob, dial, or slider remains at the end of the manipulation, represents the present state of the control parameter).

As the control of functions of physical-world apparatus such as home appliances is increasingly carried out by means of programmable devices such as laptop computers, tablets, smartphones, smart watches, and the like, virtual counterparts of the physical world controls have been used as part of a graphical user interface (GUI), said counterparts including GUI widgets such as virtual switches, knobs, dials, sliders, and spinners. Just like their physical-world predecessors, these GUI widgets combine a way to accept user input with a way to communicate state information to the user. However, in order to be easy to manipulate by means of pointing devices such as a mouse, a stylus, or by means of a finger of the user (on touch screens), these displayed GUI widgets must be sufficiently large. This limits the number of such GUI widgets which may be displayed simultaneously on a given display area.

US patent application publication no. US 2013/0113822 A1, entitled "Interface for Home Energy manager", discloses a device including a device manager stored on a computer readable storage device. A display has multiple tiles corresponding to smart devices installed in a user home having inter-dependent statuses and settings. The device manager generates the tiles with corresponding smart device information displayed in the tiles, and selection of a tile provides a view showing details about the smart device while not obscuring unselected tiles. It is a disadvantage of this system that individual tiles have to be selected in order to obtain information about a presently selected value of a control parameter.

US patent application publication no. US 2014/0359468 A1, entitled "Method for controlling information apparatus and computer-readable recording medium", discloses a control method causing a computer of an information apparatus to: display on a touch panel display, a display screen representing a floor plan; display device icons on the display screen, the device icons representing one or more target devices respectively, the device icons including an icon representing an electric shutter device that is capable of opening or closing a shutter; display an operation screen on the display screen, when selection of the icon representing the electric shutter device is sensed, the operation screen including a shutter image representing the shutter; and output a movement control command to a network when a swipe operation is sensed on the shutter image, the movement control command being for moving the shutter of the electric shutter device in a swipe direction of the swipe operation, the electric shutter device corresponding to the selected icon. It is a disadvantage of this system that the icon has to be selected in order to obtain information about the present state of the shutter.

US patent application publication no. US 2014/068486 A1, entitled "Connected Home User Interface Systems and Methods", discloses connected home user interface systems and methods. An exemplary method includes a user interface subsystem communicatively coupled to a home monitor and control subsystem providing a graphical user interface view for display on a display screen, the graphical user interface view including a graphical representation of a floor plan of a home associated with the home monitor and control subsystem and a graphic representing an element of the home monitor and control subsystem, wherein the graphic is positioned relative to the graphical representation of the floor plan in the graphical user interface view to visually indicate a location of the element at the home. Corresponding methods and systems are also disclosed. It is a disadvantage of these systems and methods that the graphics representing the elements must be selected to obtain information about the presently selected value of certain types of control parameters.

US patent application publication no. US 2013/061180 A1 discloses methods and systems for adjusting a device setting in response to a single motion. The method includes initiating a user interface in response to a tap down on a device setting icon without releasing. The method also includes adjusting a device setting in response to a dragging or sliding on the device setting icon without releasing. The method further includes confirming the device setting by releasing once a desired device setting level has been attained. It is a disadvantage of this method that the device setting icon must be tapped to obtain information about the presently selected device setting level.

US patent application publication no. US 2012/030626 A1 discloses a control object including a knob element, which is displayed in a GUI. A first user input can be detected that indicates selection of the knob element. In response to the first user input, the knob element can be visually augmented. The visual augmentation can include displaying text labels of range limit values and a slider element with the knob element. The slider element can include a fill bar to indicate the current value of the knob element. A second input can be a linear motion on or near the slider control. In response to the second user input, both the fill bar of the slider element and a fill portion of the knob element can be visually augmented to indicate the change in the value. A cursor image of a pointing device providing the second input can be hidden at least during the receiving of the second input. This publication does not pertain to home automation systems, and does not disclose how the control object could be used to address more complex control parameters of certain apparatus in home automation systems.

### Summary

The inventors have found that there is a need for an improved system for adjusting a control parameter of a function of an apparatus, in particular in the field of home automation, where it is desired that a large number of apparatuses with often complex control parameters are controlled by a single system.

According to an aspect of the present invention, there is provided a home automation system, comprising a plurality of apparatuses and a system, connected to the apparatuses via a network, for adjusting a control parameter of a function of an apparatus, the system comprising: a display adapted to display at least one graphical user interface element; a human interface device adapted to accept user interaction with the at least one graphical user interface element; and interfacing means adapted to transmit a control signal representative of a selected value of the control parameter to the apparatus in response to the user interaction; wherein the system is adapted to operate the at least one graphical user interface element in at least a first state with a first representation and a second state with a second representation, the first representation occupying a smaller area of the display than the second representation; wherein the first representation comprises an icon indicative of the function and/or the apparatus, and a graphical representation of a presently selected value of the control parameter; wherein the first state is responsive to a first predetermined input of the human interface device to transition to the second state; wherein the second representation comprises virtual control means capable of being actuated by means of the human interface device to select the value of the control parameter; wherein the second state is responsive to a second predetermined input of the human interface device to transition to the first state; and wherein the control parameter is a scalar parameter or a composite parameter.

The "system for adjusting a control parameter" is used as a control screen for several functions of a home automation system, wherein the apparatus are the various devices and appliances that can be controlled around the home. Several simultaneously displayed graphical user interface elements as described above can thus form a "dashboard" of the home automation system.

It is an advantage of the invention that a large number of graphical user interface elements (widgets) used to provide control of functional parameters of physical-world apparatus can be displayed side-by-side on a display when they are in their passive state, while remaining recognizable as icons and still retaining the ability to provide feedback to the user about the present value of the relevant parameter. As these elements also have a second, activated state, which is allowed to occupy a larger amount of screen real estate, they become easy to manipulate by means of a human interface device such as a mouse, stylus, or touch screen.

In an embodiment of the system according to the present invention, the control parameter is a scalar parameter.

It is an advantage of this embodiment that it can be used to control a function of an apparatus that is specified by a single value, such as the output volume of an audio amplifier, the brightness of a lamp with a dimming function, the position of a window shade or shutter, the speed of a fan, the temperature of a thermostat, a delay or a duration of a timer, and the like. In this embodiment, the virtual control means may for example take the shape of a virtual knob, dial, or slider.

In an embodiment of the system according to the present invention, the control parameter is a composite parameter.

It is an advantage of this embodiment that it can be used to control a function of an apparatus that is specified by multiple values, such as the hue of a multi-color lighting apparatus, the spatial distribution of sound in a surround sound system, and the like. In this embodiment, the virtual control means may for example take the form of a two-dimensional field in which a pointer can be moved around to a position representative of a desired value of the parameter.

According to an aspect of the present invention, there is provided a method for providing control of a control parameter of a function of an apparatus of a plurality of apparatuses in a home automation system by means of a graphical user interface element that is connected to said apparatuses via a network, the method comprising: in a first state: displaying the graphical user interface element in a first representation on a display, the first representation comprising an icon indicative of the function and/or the apparatus, and a visual representation of a presently selected value of the control parameter; and transitioning to a second state in response to a first predetermined input of the human interface device; in the second state: displaying the graphical user interface element in a second representation on the display, the second representation comprising virtual control means; accepting user interaction with the virtual control means via a human interface device so as to allow a user to select a value of the control parameter; and transitioning to the first state in response to a second predetermined input of the human interface device; and transmitting a control signal representative of the control parameter to the apparatus in response to the user interaction; wherein the first representation occupies a smaller area of the display than the second representation; and wherein the control parameter is a scalar parameter or a composite parameter.

According to an aspect of the present invention, there is provided a computer program product for providing control of a control parameter of a function of an apparatus of a plurality of apparatuses in a home automation system by means of a graphical user interface element that is connected to said apparatuses via a network, the computer program product comprising code means configured to: in a first state: display the graphical user interface element in a first representation on a display, the first representation comprising an icon indicative of the function and/or the apparatus, and a visual representation of a presently selected value of the control parameter; and transition to a second state in response to a first predetermined input of the human interface device; in the second state: display the graphical user interface element in a second representation on the display, the second representation comprising virtual control means; accept user interaction with the virtual control means via a human interface device so as to allow a user to select a value of the control parameter; and transition to the first state in response to a second predetermined input of the human interface device; and transmit a control signal representative of the control parameter to the apparatus in response to the user interaction; wherein the first representation occupies a smaller area of the display than the second representation; and wherein the control parameter is a scalar parameter or a composite parameter.

The technical effects and advantages of embodiments of the method and the computer program product according to the present invention correspond, *mutatis mutandis,* to those of the corresponding embodiments of the system according to the present invention.

### Brief Description of the Figures

These and other features and advantages of embodiments of the present invention will now be described in more detail with reference to the accompanying figures, in which:
- Figure 1 schematically illustrates a system according to an embodiment of the present invention;
- Figure 2 present exemplary icons that can serve as "first representations" in embodiments of the present invention;
- Figure 3 presents exemplary transitions between a set of "first representations" and a selected "second representation" in an embodiment of the present invention;
- Figure 4 presents exemplary transitions between a set of "first representations" and a selected "second representation" in another embodiment of the present invention; and
- Figure 5 presents a flow chart of an embodiment of the method according to the present invention.

### Detailed Description of Embodiments

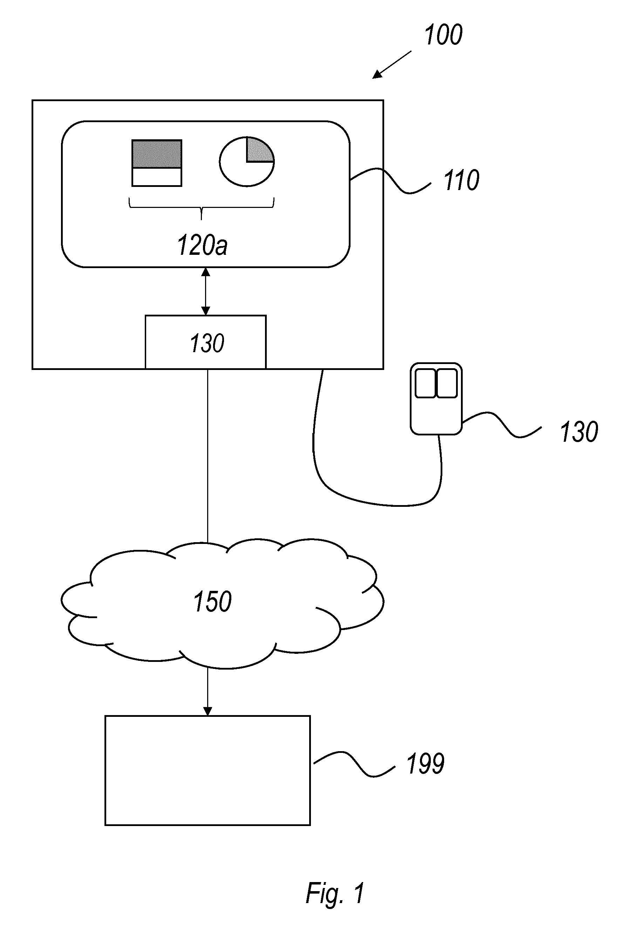

Figure 1 schematically illustrates a system **100** as comprised in an exemplary embodiment of the present invention. The system **100** is arranged to control at least one control parameter of a function of an apparatus **199,** to which it is connected by means of any appropriate interface **130.** The connection between the interface **130** and the apparatus **199** may be established over a network, such as a personal or local area network **150.** If remote operation is desired, the network may the Internet or a virtual private network established over the Internet. The term "interface" refers to the hardware and/or software required to allow communication with apparatus **199** at the relevant levels of the protocol stack; preferably, the interface operates in accordance with standardized protocols such as the IEEE 802.3 "Ethernet" standard or the IEEE 802.11 "WiFi" standard for the physical layer and the data link layer, and the TCP/IP protocol stack for higher layers.

In particular, the system is part of a home automation system, and the apparatus to be controlled may pertain to typical home automation functions such as heating, ventilation, air conditioning, lighting, audio and video, window shading, door locking, and the like.

The system **100** comprises a display **110** adapted to display at least one graphical user interface element **120** and a human interface device **130** adapted to accept user interaction with the at least one graphical user interface element **120.** Without loss of generality, the human interface device **130** has been illustrated as a pointing device (in particular a mouse), separate from the display **110.** The skilled person will appreciate that the human interface device **130** may be integrated with the display **110,** as is the case for a touch screen that is operated by the user's finger(s) or by a stylus. Interfacing means **130** are provided to transmit a control signal representative of a selected value of the control parameter to the apparatus **199** in response to the user's interaction with the graphical user interface element **120,** so as to actually control the function of the apparatus **199.**

According to the invention, the system **100** is adapted to operate the graphical user interface element **120** in two different states.

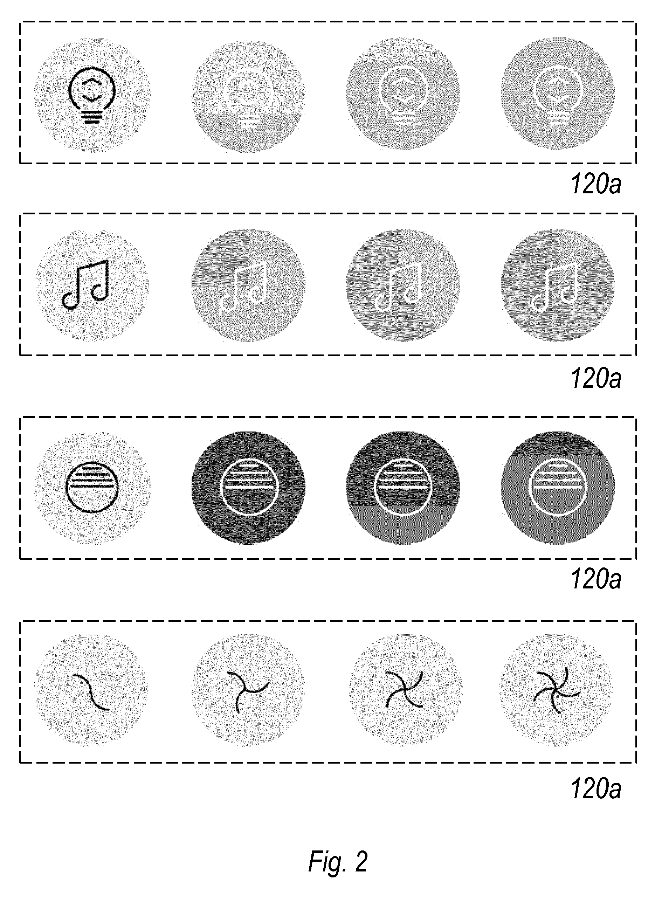

In the first state, the graphical user interface element **120** has a first representation **120a,** which comprises an icon indicative of the function and/or the apparatus the control of which it gives access to. Figure 2 provides 4 exemplary sets of icons that can be used as first representations for the graphical user interface elements that would give access to the control of a light with a dimming function (first row), an audio volume (second row), a closing level of a window shutter (third row), and a fan speed (fourth row). While the first representation **120a** of the graphical user interface element **120** is deliberately small, so as to allow the simultaneous presentation of several such elements on a display with limited size, such as the screen of a smart watch, a smart phone or tablet, it still provides recognizability and state feedback in the form of a graphical representation of a presently selected value of the control parameter. A graphical representation of the value is generally more suited for display in a very small size than an alphanumerical representation, thus further contributing to optimal screen area use.

With reference to the exemplary elements shown in Figure 2, taken from top to bottom, the control parameters may be represented as follows:
- the state of the dimmer may be represented by a split in the background color of the icon, the vertical position of which varies with varying light brightness levels;
- the state of the audio volume may be represented by highlighting a circle sector that is proportional to the selected sound volume level within a circular area that defines the icon space; alternatively, the playback position within an audio track can be visualized in this way;
- the state of the window shutter may be represented by a split in the background color of the icon, the vertical position of which varies with the position of the shutter;
- the state of the fan may be represented by variations of a stylized fan symbol with varying numbers of fan blades.

The first state is responsive to a first predetermined input of the human interface device **130,** such as the graphical user interface element **120** being clicked, double-clicked, tapped, or similarly activated, depending on the type of human interface device **130** being used, to transition to the second state. In the second state, the graphical user interface element **120** has a second representation **120b,** which occupies a larger area of the display **110** than the first representation **120a,** so as to facilitate more elaborate interaction by the user. The second representation **120b** may envelop a part or all of the available screen space, depending on the size of the display **110;** it may overlap with the space otherwise occupied by first representations of other graphical user interface elements. Depending on the application and the available screen size, the first representation **120a** may remain totally or partly visible in the second state. In that case the visible first representation **120a** or part thereof may or may not be able to accept user interaction. For example, after the graphical user interface element **120** being transitioned from the first representation **120a** to the second representation **120b,** it can be transitioned back to the first representation **120a** by simply again clicking, double-clicking, tapping or similarly deactivating the graphical user interface element **120.** According to other embodiments, going back from the second representation **120b** to the first representation **120a** can be automatic after having selected the value of the control parameter (see below) or by clicking, double-clicking or tapping a cross that is present, e.g. in an upper right corner (see further) or any other suitable location, in the drop down window (see further).

The second representation **120b** comprises virtual control means capable of being actuated by means of the human interface device **130** to select the value of the control parameter. Exemplary embodiments of the virtual control means may include slide bars and dials. The second state is responsive to a second predetermined input of the human interface device **130,** in particular an action indicative of the completion of the selection of the control parameter's value, to transition to the first state.

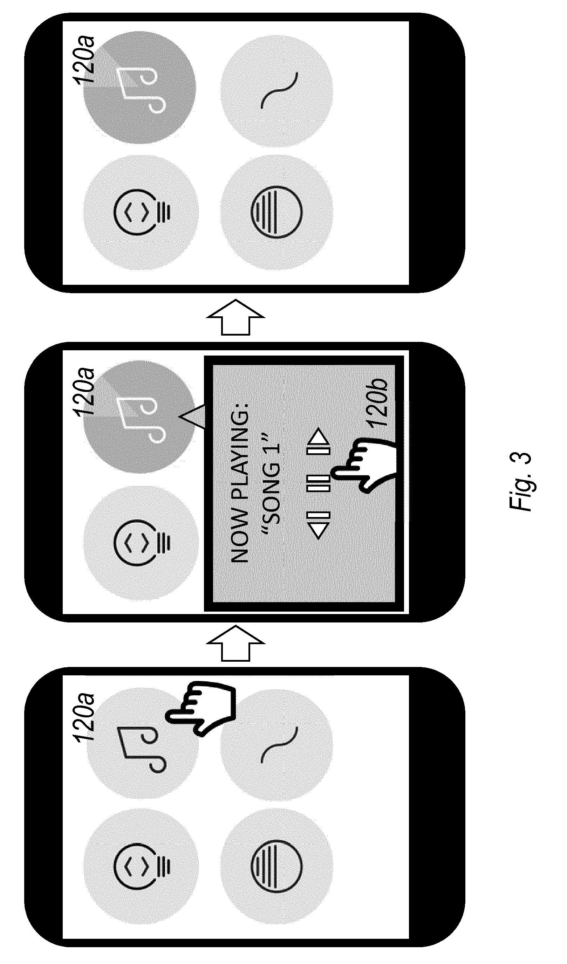

Figure 3 presents exemplary transitions between a set of "first representations" and a selected "second representation" in an embodiment of the present invention.

Without loss of generality, a smart phone screen is illustrated with four graphical user interface elements, which correspond to first representations for the functions represented in Figure 2. In the left-most figure, all four elements are shown in their first representation. A user interacts with the "audio" element (top right icon on the smart phone), shown in its first representation **120a,** by tapping the corresponding icon. This element switches to its second representation **120b,** which in the present example is, additionally to the first representation **120a** that may remain partly visible, a drop down window in which the possibilities for controlling a function behind the icon are shown. In the present example of the audio element, this may be the possibility to start playing, stop playing or pause and rewind or forward a particular song (middle figure). The drop down window occupies a part of the screen that is larger than the space occupied by the icon. Thanks to its larger size, as compared to the icons used as first representations, the second representation **120b** of the "audio" element allows easy manipulation. In the example given, the user may, for example, start playing a song by tapping the play button or pause playing the song by tapping the pause button (typically, the play button and the pause button are displayed alternatively depending on whether a song is presently playing). After that or when the user taps another appropriate button, such as for example the icon itself, the element transitions back to its first state, where it is again represented only by its first representation **120a,** which has been adequately updated to graphically convey information about the new state of the audio system to the user (right-most figure). In the example given, the new state of the audio system is variable, as it keeps on changing because it shows how long a song is playing.

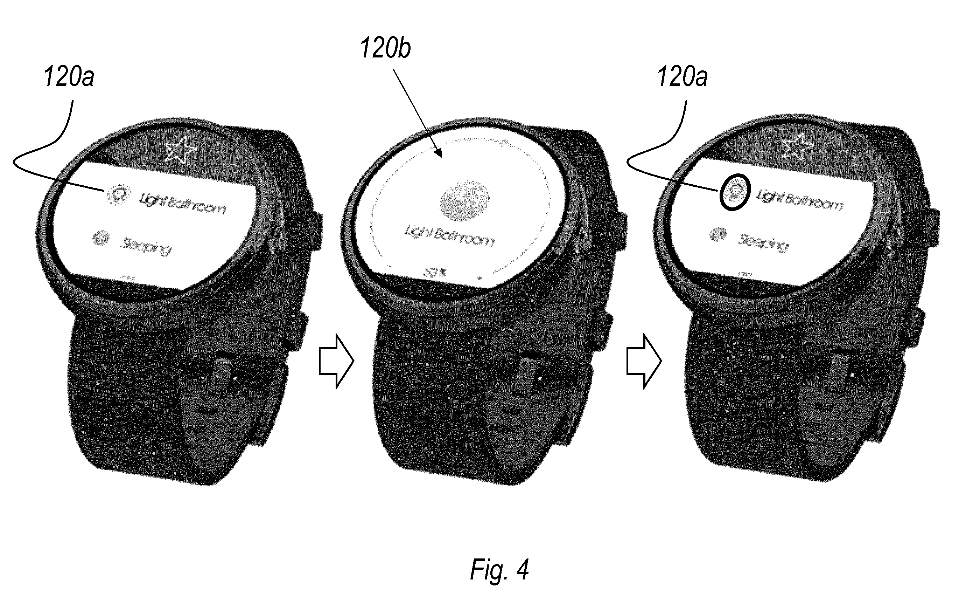

Another example is represented in Figure 4. In the left-most figure, graphical user interface elements, which correspond to first representations for the functions represented in Figure 2, are shown on the screen of a smart watch. The first representations may be shown in such a way that a user can scroll through these representations in order to choose that function he wants to control. The user interacts with the chosen element, in the example given the "dimmer" element, shown in its first representation **120a,** by tapping the corresponding icon. In response to this activation of the "dimmer" element, this element switches to its second representation **120b** (middle figure), which occupies the entire screen of the device in this example. Thanks to its larger size, as compared to the icons used as first representations, the second representation **120b** of the "dimmer" element allows easy manipulation. In the illustrated case (middle figure), the user may drag a virtual knob in clockwise direction to increase the dimming level, or drag it in counterclockwise direction to decrease the dimming level, which is an intuitive virtual equivalent of a physical-world dimming knob. Upon termination of the dragging movement, and optionally after a short delay to allow further dimming adjustments, the "dimmer" element transitions back to its first state, where it is again represented by its first representation **120a,** which has been adequately updated to graphically convey information about the new state of the dimmer to the user (right-most figure). The same process can be repeated at will for all of the elements. Depending on the type of device used and the size of the display **110,** the second representation may occupy a larger part of the screen than the icons or may occupy the entire screen.

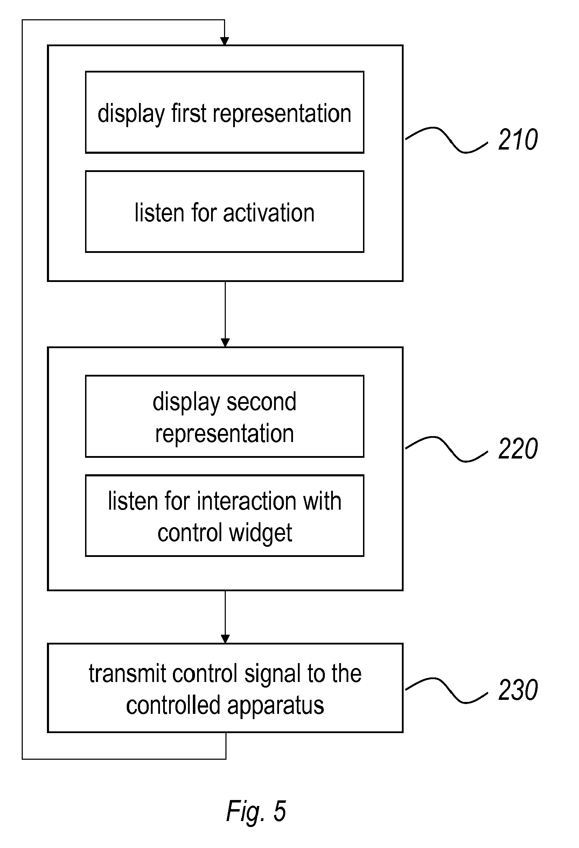

Figure 5 presents a flow chart of an embodiment of the method according to the present invention. The method provides control of a control parameter of a function of an apparatus by means of a graphical user interface element. Details described above in the context of embodiments of the system according to the present invention apply equally to the presently described embodiment of the method according to the invention, and will not be repeated. Where elements identical or equivalent to those of the described system according to the present invention are mentioned, reference numbers referring to Figure 1 will be used.

The illustrated method includes a first state **210,** in which a graphical user interface element **120** is displayed in a first representation **120a,** which comprises an icon indicative of the function and/or apparatus to be controlled, and a visual representation of a presently selected value of the control parameter. The first state **210** is configured to respond to a first predetermined input of the human interface device **130,** in particular an activation of the relevant graphical user interface element **120,** by transitioning to a second state. In the second state **220,** the graphical user interface element **120** is displayed in a second representation **120b,** which comprises virtual control means. Depending on the application and the available screen size, the first representation **120a** may remain totally or partly visible in the second state **220.** The second state **220** is configured to accept user interaction with the virtual control means of the second representation **120b** via the human interface device **130** so as to allow the user to select a value of the control parameter, and to transition to the first state in response to a second predetermined input of said human interface device **130.** The method further comprises transmitting **230** a control signal representative of the control parameter to the apparatus **199** in response to the user interaction. The first representation **120a** occupies a smaller area of the display **110** than the second representation **120b.**

The skilled person will appreciate that the method described above may be implemented in software. The present invention also pertains to a program comprising code means configured to cause a processor to carry out the steps of the method according to the present invention. The program may be provided as a computer program product, which may be made available on a computer-readable medium such as a magnetic disc, an optical disc, or a semiconductor memory, or via a computer network.

While the invention has been described hereinabove with reference to specific embodiments, this is done to clarify and not to limit the invention, the scope of which is defined by the accompanying claims.

## Claims

1. A home automation system, comprising a plurality of apparatuses (199) and a system (100), connected to the apparatuses (199) via a network (150), for adjusting a control parameter of a function of at least one apparatus of said plurality of apparatuses (199), the system comprising:
- a display (110) adapted to display at least one graphical user interface element (120);
- a human interface device (130) adapted to accept user interaction with said at least one graphical user interface element (120); and
- interfacing means (130) adapted to transmit a control signal representative of a selected value of said control parameter to said apparatus (199) in response to said user interaction;
wherein the system (100) is adapted to operate said at least one graphical user interface element (120) in at least a first state with a first representation (120a) and a second state with a second representation (120b), said first representation occupying a smaller area of said display (110) than said second representation;
wherein said first representation (120a) comprises an icon indicative of said function and/or said apparatus, and a graphical representation of a presently selected value of said control parameter;
wherein said first state is responsive to a first predetermined input of said human interface device to transition to said second state;
wherein said second representation (120b) comprises virtual control means capable of being actuated by means of said human interface device to select said value of said control parameter; wherein said second state is responsive to a second predetermined input of said human interface device to transition to said first state; and
wherein the control parameter is a scalar parameter or a composite parameter.

2. The home automation system according to any of the previous claims, wherein the first representation and the second representation appear on the display (110) together.

3. A method for providing control of a control parameter of a function of an apparatus of a plurality of apparatuses (199) in a home automation system by means of a graphical user interface element (120) that is connected to said apparatuses (199) via a network (150), the method comprising:
- in a first state (210):
o displaying said graphical user interface element (120) in a first representation (120a) on a display (110), said first representation (120a) comprising an icon indicative of said function and/or said apparatus, and a visual representation of a presently selected value of said control parameter; and
o transitioning to a second state in response to a first predetermined input of said human interface device;
- in said second state (220):
o displaying said graphical user interface element (120) in a second representation (120b) on said display (110), said second representation (120b) comprising virtual control means;
o accepting user interaction with said virtual control means via a human interface device (130) so as to allow a user to select a value of said control parameter; and
o transitioning to said first state in response to a second predetermined input of said human interface device;
and
- transmitting (230) a control signal representative of said control parameter to said apparatus (199) in response to said user interaction;
wherein said first representation occupies a smaller area of said display (110) than said second representation; and
wherein the control parameter is a scalar parameter or a composite parameter.

4. A computer program product for providing control of a control parameter of a function of an apparatus of a plurality of apparatuses (199) in a home automation system by means of a graphical user interface element (120) that is connected to said apparatuses (199) via a network (150), the computer program product comprising code means configured to:
- in a first state (210):
o display said graphical user interface element (120) in a first representation (120a) on a display (110), said first representation (120a) comprising an icon indicative of said function and/or said apparatus, and a visual representation of a presently selected value of said control parameter; and
o transition to a second state in response to a first predetermined input of said human interface device;
- in said second state (220):
o display said graphical user interface element (120) in a second representation (120b) on said display (110), said second representation (120b) comprising virtual control means;
o accept user interaction with said virtual control means via a human interface device (130) so as to allow a user to select a value of said control parameter; and
o transition to said first state in response to a second predetermined input of said human interface device;
and
- transmit (230) a control signal representative of said control parameter to said apparatus (199) in response to said user interaction;
wherein said first representation occupies a smaller area of said display (110) than said second representation; and
wherein the control parameter is a scalar parameter or a composite parameter.
